# EUROPEAN PATENT SPECIFICATION

(11) **EP 3 593 928 B1**
(45) Date of publication and mention of the grant of the patent: **24.02.2021**
(21) Application number: 18182674.4
(22) Date of filing: 10.07.2018
(51) Int. Cl.: B23C 5/22, B23C 5/10, B23C 5/20

(54) **A TANGENTIAL CUTTING INSERT AND A MILLING TOOL**
TANGENTIALER SCHNEIDEINSATZ UND FRÄSWERKZEUG
INSERT DE DÉCOUPE TANGENTIEL ET OUTIL DE FRAISAGE

(43) Date of publication of application: 15.01.2020
(73) Proprietor: AB Sandvik Coromant, 811 81 Sandviken (SE)
(72) Inventor: SCHMITT, Jeremy, 37190 Druye (FR); SARTON, Yannick, 37230 LUYNES (FR); UZENOT, Hervé, 45190 Villorceau (FR)
(74) Representative: Sandvik

(56) References cited:
- US-A1- 2005 063 792
- US-A1- 2012 195 700
- US-A1- 2013 108 387
- US-B2- 9 296 054

## Description

### TECHNICAL FIELD OF THE INVENTION

The invention relates to a tangential cutting insert and a milling tool for chip-removing machining, and particularly to a so called long edge milling cutter equipped with the tangential cutting insert.

### BACKGROUND OF THE INVENTION AND PRIOR ART

The invention is related to problems of reduced tool life in a milling tool caused by large cutting forces acting on the cutting edges of the tangential cutting inserts mounted in insert seats of the milling tool. Such large cutting forces are particularly problematic in a so called long edge milling cutter, also known as an extended flute end mill, typically used for milling deep shoulders at large axial cutting depths in a workpiece. The long edge milling cutter (or extended flute end mill) comprises a plurality of cutting inserts and insert seats placed one after the other in a common flute extending along a tool body of the milling tool. Such milling tools are suitable for deeper, larger and heavier milling applications, since the long edge milling cutter has a large metal removal capacity. However, the cutting forces are considerable making this a tough milling application. Moreover, the large cutting forces may vary in direction due to for instance up- and/or down-ramping operations performed with the long edge milling cutter. If the cutting insert is inadequately supported in the insert seat of the tool body, the large and/or varying cutting forces will make the cutting insert move slightly in the insert seat, wherein even small movements (micro-movements) will not just generate poor surface quality in the machined workpiece, but also cause an increased wear on the cutting insert itself. Additionally, the insert seat in the tool body of the milling tool may undergo plastic deformation caused by such large and/or varying cutting forces. More precisely, the insert seat comprises several contact surfaces abutting several support surfaces of the cutting insert, wherein the contact surfaces in the insert seat will gradually deteriorate due to the load of the cutting forces. The tool body of the milling tool is considered worn out when the plastic deformation of the contact surfaces in the insert seat has become too severe (i.e. the insert seat no longer provides accurate and stable support). Furthermore, while it is possible to limit the cutting forces by using an end mill or shoulder mill of limited (single cutting insert) height and machine deep shoulders or grooves in several passes, the economics (productivity requirements) in certain machining applications (in for instance aerospace industry) push toward larger cutting depths, which is particularly suitable for the long edge milling cutter (extended flute end mill). Although the mentioned problems of reduced tool life are also present in end mills/shoulder mills of limited (single cutting insert) height, the expected tool life of the long edge milling cutter is often less than 20% of a comparable (single cutting insert height) shoulder/end milling tool due to the severe demands put on such tools. Consequently, there is a desire to improve the performance and useful tool life of the long edge milling cutter. EP2404690 discloses a long edge milling cutter comprising tangential cutting inserts configured for stable and accurate support in the insert seat. The tangential cutting insert is configured with a first side forming a rake surface and an opposing second side forming a v-shaped seating surface for supporting the tangential cutting insert. One disadvantage with such a design is that the tangential insert only has one rake surface with two indexable (first and second) cutting edges, since the opposing second side (seating) surface is dedicated for supporting the tangential cutting insert. It would therefore be beneficial if an increased number of indexable cutting edges (rake faces) could be achieved, while ensuring a stable support of the tangential cutting insert.

US9296054 discloses a tangential cutting insert with the features of the preamble of claim 1, which is used in a shoulder milling tool. The shoulder mill is of limited (single cutting insert) height. However, the tangential cutting insert is an indexable and triangular shaped cutting insert that provides an increased number of indexable cutting edges (six indexable major cutting edges) compared to the tangential cutting insert disclosed in EP2404690. Furthermore, each side of the tangential cutting insert comprises two planar seating surfaces formed at an angle with respect to a connection portion, wherein the two planar seating surfaces form recesses being countersunk in relation to the cutting edges to give the cutting edges a positive rake angle to easily cut the workpiece. The two seating surfaces are used together with a first or second (main) surface to provide three-point contact when the tangential cutting insert is in the mounted position. The cutting insert is described as having an exceptional seating stability. However, it would be desirable to increase the seating stability and cutting performance even further, particularly since the entire major cutting edge of the tangential cutting insert is typically engaging the workpiece in a long edge milling cutter (or extended flute end mill) used for machining at large axial cutting depths.

### SUMMARY OF THE INVENTION

The object of the present invention is that of providing a tangential cutting insert and a milling tool having an improved stability in the support of the tangential cutting insert that also exhibits an effective cutting geometry. The support is aimed at withstanding relatively large cutting forces that may vary in direction during up- and/or down-ramping performed in a milling operation with for instance a long edge milling cutter. In other words, the object is that of prolonging the tool life by improved insert retention security in combination with enhanced cutting performance.

The object is achieved by a tangential cutting insert as defined in claim 1. The triangular basic shape of the tangential cutting insert includes three flat support surfaces in each side surface for a stable fixation/support of the tangential cutting insert and an efficient distribution of said large and/or varying cutting forces. The three flat support surfaces are furthermore recessed in relation to the major cutting edge to provide a positive rake angle and an enhanced/easy cutting action along the entire major cutting edge extension. Hence, a first flat support surface is disposed at a centre of each side surface and forms the lowermost recessed support surface in relation to the major cutting edge, wherein the second and third flat support surfaces are located on opposite sides of the first flat support surface and extend at an obtuse angle with respect to the first flat support surface. The tangential cutting insert can in this way provide three distinct, differently oriented and relatively large flat support surfaces in each side surface, which can interchangeably engage three corresponding seat contact surfaces to effectively constrain insert movement and safeguard the integrity (reduce load/plastic deformation) on the seat contact surfaces by providing a beneficial distribution of large cutting forces acting in different directions. Accordingly, a first contact surface in the seat of the tool body can be arranged to provide support against the first flat support surface at the centre on one side surface of the tangential cutting insert, wherein a second and third contact surface in the seat of the tool body can be arranged to provide support against the second and third flat support surface respectively on another side surface of the tangential cutting insert. This provides said stable support and efficient distribution of the large/varying cutting forces, which are also effectively reduced by the enhanced/easy cutting action by a positive rake angle along the major cutting edge that is provided by the recessed flat support surfaces. An improved tool life is therefore achieved. In an embodiment of the tangential cutting insert, the first flat support surface extends in parallel with the major cutting edge. This provides a beneficial symmetry in terms of cutting performance and support along the centre of the side surface and the major cutting edge. Such symmetry is also beneficial in allowing the cutting insert to be designed as a double-sided tangential cutting insert that can reversed with an additional set of three identical and indexable cutting edges at the intersection of the other main surface and the three identical side surfaces. In addition, if the tangential cutting insert is designed as a double-sided cutting insert, the obtuse angle at which the second and third support surface extend with respect to the first support surface are of equal size (yet directed in opposite directions as the oppositely located second and third support surface ramp upwards from the lowermost recessed first support surface).

In another embodiment of the tangential cutting insert, the first flat support surface is relatively larger by having a longer extension than each one of the second and third flat support surfaces in the longitudinal direction of each side surface. In this way, the cutting forces and load distribution between the seat contact surfaces is made more even, since the first flat support surface is aimed at supporting the insert in one direction and the second and third support surfaces collectively support in other directions.

In a further embodiment of the tangential cutting insert, the first flat support surface is 30% - 70% longer than each one of the second and third flat support surfaces in the longitudinal direction of each side surface. The relative lengths are measured in a longitudinal direction that is located and extending along a middle/centre of each side surface (where the tangential cutting insert in general is being supported). Hence, as mentioned above, the loads on the seat contact surfaces are more evenly distributed, since the first flat support surface, which is supporting the insert against a single contact surface in the seat, is 30% - 70% longer than the second or third support surface that collectively support the insert in their respective directions.

In an embodiment of the tangential cutting insert, the second and third flat support surfaces are of equal size and length in the longitudinal direction of each side surface. This provides a symmetry in the support provided by the second and third flat support surfaces, whereby the load on the second and third contact surfaces in the seat is distributed more evenly. Furthermore, as previously mentioned, this symmetry is also beneficial in providing the same cutting performance and support in case the tangential cutting insert is designed as a double-sided tangential cutting insert that can be reversed with an additional set of three identical and indexable cutting edges at the intersection of the other main surface and the three identical side surfaces. In addition, it is once emphasized that the obtuse angle at which the second and third support surface extend with respect to the first support surface should be of equal size (yet directed in opposite directions, since the oppositely located second and third support surface ramp upwards from the lowermost recessed first support surface) in case the tangential cutting insert is a double-sided insert.

In another embodiment of the tangential cutting insert, the three flat support surfaces have substantially an equal width extension in a direction transverse to the longitudinal direction of each side surface. This contributes to an equal pressure distribution/load and furthermore provides a beneficial symmetry in support and cutting performance in case the tangential cutting insert is designed as a double-sided tangential cutting insert that can be reversed with an additional set of three identical and indexable cutting edges at the intersection of the other main surface and the three identical side surfaces.

In an embodiment of the tangential cutting insert, the obtuse angle is larger than 150°, and preferably larger than 160°. Such an obtuse angle between the first flat support surface and the second/third flat support surface contributes to said beneficial distribution of large cutting forces acting in different directions. Hence, it provides a stable support and an efficient distribution of the large/varying cutting forces, which are also effectively reduced by the enhanced/easy cutting action provided by the positive rake angle of the recessed flat support surfaces.

In another embodiment of the tangential cutting insert, the three flat support surfaces are arranged successively and extend along the entire side surface in the longitudinal direction. In other words, the whole longitudinal extension of each side surface can in this way be used for support to distribute the cutting forces and reduce the load on each contact surface in the seat. The insert merely includes small transition surfaces arranged between the three differently oriented flat support surfaces in each side surface as well as small radius transitions surfaces as the ends of each third/second flat support surface (corners of the insert).

In yet another embodiment of the tangential cutting insert, each major cutting edge has an adjacent rake surface in the respective side surface, wherein the rake surface extends at a positive rake angle between the entire major cutting edge and the three flat support surfaces. The rake surface may preferably have a uniform width and rake angle between the major cutting edge and the first flat support surface, wherein the width and rake angle on the rake surface successively decreases between major cutting edge and the oppositely located second and third flat support surfaces.

In yet another embodiment the tangential cutting insert is a double-sided tangential cutting insert including six identical and indexable major cutting edges formed at the intersections of each of said two opposing main surfaces and the three identical side surfaces, wherein the three flat support surfaces of each side surface are recessed in relation to two opposite and indexable major cutting edges.

The cutting insert of the invention and a tool body form a milling tool as defined in claim 11. The milling tool comprises a tool body being rotatable around a central rotation axis and has a plurality of insert seats configured to receive the tangential cutting insert as defined above. The tool body has a front end and a rear end, wherein each insert seat is formed in an envelope surface extending between the front end and the rear end of the tool body. A bottom of the insert seat comprises a main contact surface arranged to provide support against the main surface of the tangential cutting insert. A first side wall of the insert seat comprises a first contact surface arranged to provide support against the first flat support surface on one side surface of the tangential cutting insert. A second side wall of the insert seat comprises a second and third contact surface arranged to provide support against the second and third flat support surfaces respectively on another side surface of the tangential cutting insert. In other words, the second and third contact surfaces of the second side wall are arranged at an internal obtuse angle in relation to each other. The internal obtuse angle formed between the second and third contact surfaces of the seat is equal to the angle formed between the second and third support surfaces of the insert (i.e. 180° minus the obtuse angles β formed between first support surface and second support surface as well as the third support surface). Through this measure the milling tool provides an improved stability in the support of the tangential cutting insert, wherein contact surfaces in the insert seat are configured to withstand relatively large cutting forces that may vary in direction during up- and/or down-ramping performed in a milling operation with for instance a long edge milling cutter. The insert seat in the tool body can in this way provide three distinct, differently oriented and relatively large contact surfaces for supporting the three corresponding support surfaces to effectively constrain insert movement and safeguard the integrity (reduce load/plastic deformation) on the seat contact surfaces by providing a beneficial distribution of large cutting forces acting in different directions. Consequently, this improves the performance and useful tool life of the milling tool.

In an embodiment of the milling tool, the first side wall of the insert seat is located closer to the rear end of the tool body in relation to the second side wall, which is located closer to the front end of the tool body, in each of said insert seats. Through this feature the first contact surface is located on the first side wall, which is arranged closer to the rear end, whereby the relatively large/long first contact surface/support surface can support a relatively large (tangential) force component of the cutting forces.

In a preferred embodiment, the milling tool is a long edge milling cutter, wherein the tool body comprises a cylindrical envelope surface, and the plurality of insert seats are placed one after the other in a common helix flute along the cylindrical envelope surface of the tool body. As previously mentioned, such milling tools are suitable for deeper, larger and heavier milling applications, since the long edge milling cutter has a large metal removal capacity. The long edge milling cutter comprises several helix flutes along the cylindrical envelope surface of the tool body. The cutting forces are considerable making this a tough milling application, wherein the large cutting forces may also vary in direction due to for instance up- and/or down-ramping operations performed with the long edge milling cutter. Accordingly, the invention is suitably used for prolonging the useful tool life of the long edge milling cutter.

In a further preferred embodiment of the long edge milling cutter, the major cutting edge of a tangential cutting insert, which is received in an insert seat placed relatively closer to the front end in the common helix flute, is arranged to overlap a portion of the next major cutting edge of an adjacent tangential cutting insert, which is received in an insert seat placed relatively closer to the rear end in the common helix flute. This provides an uninterrupted (continuous) cutting edge formed collectively by the major cutting edges along the common helix flute of the long edge milling cutter.

In another embodiment of the milling tool, each insert seat is configured with an orientation on said contact surfaces in the first and second side walls so that the active major cutting edge is extending at a positive axial rake angle in relation to the central rotation axis when the tangential cutting insert is received in the insert seat. This provides a positive/easy cutting action and beneficial chip evacuation as the major cutting edge gradually enters the workpiece at said positive axial rake angle. Such positive axial rake angle can also enhance the toughness of the major cutting edge that may withstand relatively higher cutting forces without breaking or chipping.

### BRIEF DESCRIPTION OF THE DRAWINGS

Embodiments are described with references to the drawings, in which:
- FIG. 1a: shows a side view of a milling tool in the form of a long edge milling cutter,
- Fig. 1b: shows a perspective view of the milling tool/long edge milling cutter,
- Figs. 2a - d: show side views of a tangential cutting insert mounted in the milling tool/long edge milling cutter,
- Figs 3a - d: show a side view of the mounted tangential cutting insert including different cross-sections IIIb - IIIb to IIId - IIId showing the support of the tangential cutting insert,
- Figs 4a - d: show a perspective view of the tangential cutting insert including different side views and a main planar view of the tangential cutting insert.

### DETAILED DESCRIPTION OF EMBODIMENTS OF THE INVENTION

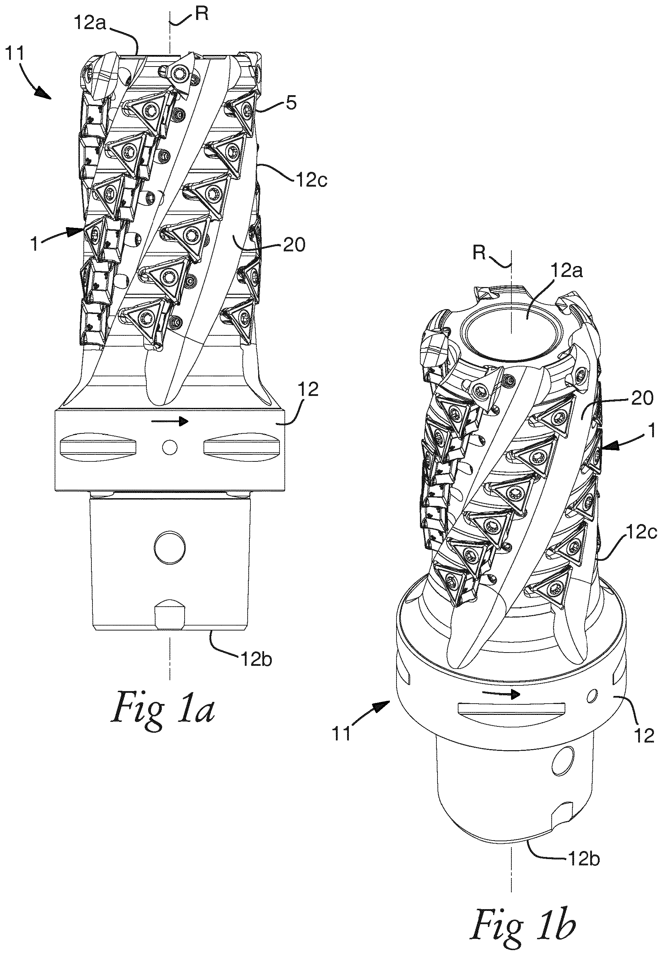

Figs 1a - 1b show different views of a milling tool 11 according to an embodiment of the invention. The milling tool is a long edge milling cutter 11 comprising a tool body 12 being rotatable around a central rotation axis R. The tool body has a front end 12a and a rear end 12b, which is configured to be mounted to a spindle of a milling machine (not shown). The tool body 12 comprises a plurality of insert seats 13 being formed in a cylindrical envelope surface 12c of the tool body. The insert seats 13 are placed one after the other in a common helix flute 20 extending along the cylindrical envelope surface 12c of the tool body 12. This specific embodiment comprises five helix flutes 20 along the envelope surface 12c of the tool body 12. The insert seats 13 (except an axially foremost insert seat arranged at the front end 12a) are configured to receive a tangential cutting insert 1 according to an embodiment of the invention.

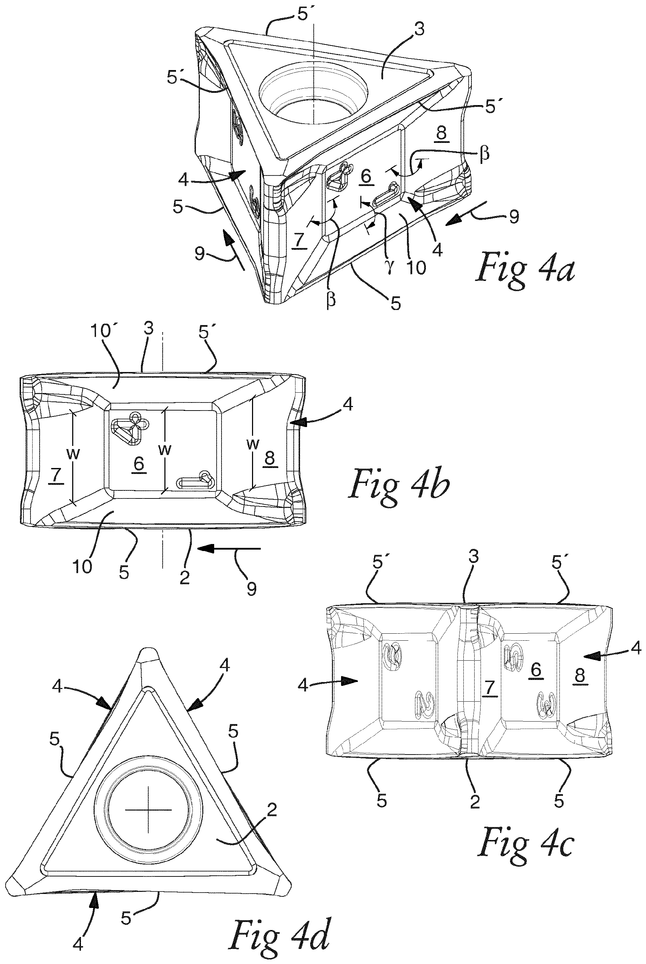

Figs 4a - 4d show different views of the tangential cutting insert 1 of the embodiment. The tangential cutting insert 1 comprises two opposing main surfaces 2, 3 having a triangular shape and three identical side surfaces 4 extending between the main surfaces 2, 3. The tangential cutting insert 1 includes three identical and indexable major cutting edges 5 formed at the intersection of one main surface 2 and the three identical side surfaces 4.

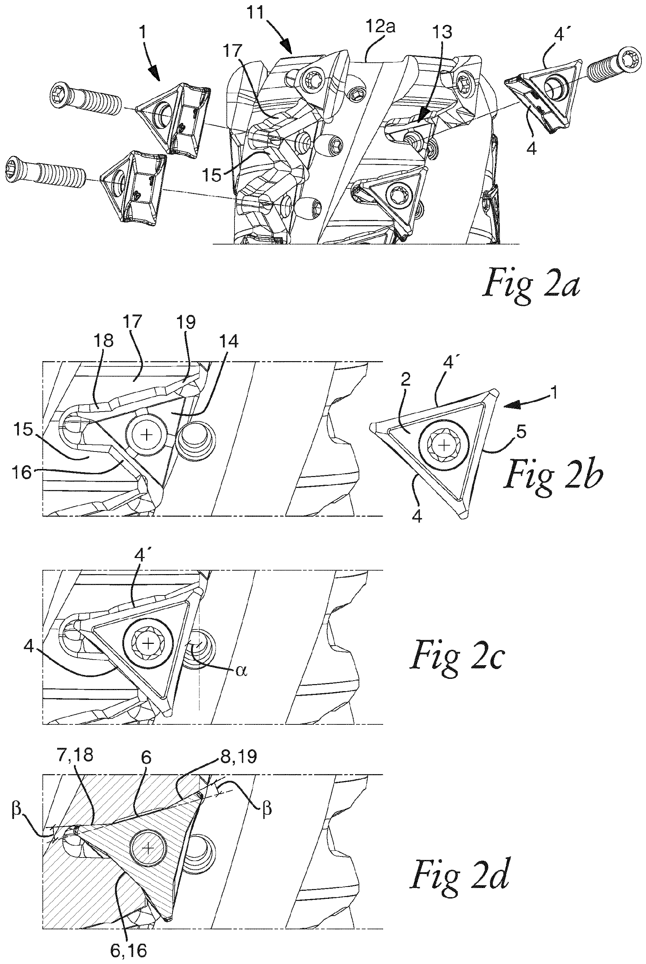

Furthermore, as can be seen, the embodiment is a double-sided tangential cutting insert including an additional set of three identical and indexable major cutting edge 5' formed at the intersection of the other main surface 3 and the three identical side surfaces 4. Hence, the double-sided tangential cutting insert includes six identical and indexable major cutting edges 5, 5'. Each side surface 4 includes three flat support surfaces 6, 7, 8 being recessed in relation to the major cutting edges 5, 5'. The three flat support surfaces 6, 7, 8 are arranged one after the other in a longitudinal direction 9 of each side surface 4, wherein a first flat support surface 6 is disposed a centre of each side surface 4 and is forming the lowermost recessed support surface in relation to the major cutting edge 5. The second and third flat support surfaces 7, 8 are located on opposite sides of the first flat support surface 6 and extend at an obtuse angle β with the first flat support surface 6 (see also Fig 2d).

Accordingly, the double-sided and triangular shaped tangential cutting insert 1 is provided with the three flat support surfaces 6, 7, 8 in each side surface 4 for a stable fixation/support of the tangential cutting insert 1 and an efficient distribution of large and/or varying cutting forces. As can be seen, the three flat support surfaces 6, 7, 8 are also recessed in relation to the major cutting edge 5, 5' to provide a positive rake angle γ and an enhanced/easy cutting action along the extension of the major cutting edge 5, 5'. The first flat support surface 6 is disposed at a centre of each side surface 4, 4' and is forming the lowermost recessed support surface in relation to the major cutting edge 5, 5', wherein the second and third flat support surfaces 7, 8 are located on opposite sides of the first flat support surface 6 and extend at an obtuse angle β with the first flat support surface 6.

The obtuse angle β between the first and second or third flat supports surfaces is larger than 150°, and preferably larger than 160°. More precisely, in the shown embodiment the obtuse angle β is 167,5°. The first flat support surface 6 extends in parallel with the major cutting edge 5, 5'. Furthermore, the first flat support surface 6 is relatively larger by having a longer extension that each one of the second and third flat support surface 7, 8 in the longitudinal direction 9 of each side surface 4. Through this measure the cutting forces/loads are beneficially distributed in the insert seat, since the first flat support surface 6 will support the tangential cutting insert in one direction and the second and third support surfaces 7, 8 collectively support the tangential cutting insert in other directions. In the embodiment, the first flat support surface 6 is approximately 40% longer than the second or third flat support surface 7, 8 as seen in the longitudinal direction 9 in the middle of each side surface 4. As can be seen in the figures the second and third support surfaces 7, 8 is slightly longer if measure in a longitudinal direction 9, which is located nearer either of the major cutting edges 5, 5'. The effective length of each support surface 6, 7, 8 for supporting the insert should in this case be considered when comparing the relative lengths between the support surfaces 6, 7, 8. Hence, in this embodiment, the relative lengths are measured along the middle of each side surface 4, 4' of the insert.

The second and third flat support surfaces 7, 8 are of equal size and length in the longitudinal direction 9 of each side surface 4. This provides a symmetry in the support/load on the second and third flat support surfaces 7, 8. Furthermore, this symmetry also provides the same cutting performance as the double-sided tangential cutting insert 1 is reversed with the additional set of three identical and indexable cutting edges 5' at the intersection of the other main surface 3 and the three identical side surfaces 4, 4'.

Moreover, the three flat support surfaces 6, 7, 8 are arranged successively and extend along the entire side surface 4, 4' in the longitudinal direction 9. Accordingly, the three flat support surfaces 6, 7, 8 extend along the whole longitudinal extension of each side surface 4, 4' to enhance the beneficial distribution of the cutting forces and further reduce the load on each contact surface in the insert seat 13. As can be seen, the tangential cutting insert merely includes small transition surfaces arranged between the three differently oriented flat support surfaces 6, 7, 8 in each side surface 4, 4' as well as small radius transitions surfaces as the ends of each third/second flat support surface 7, 8 (corners of the insert). The shown three flat support surface 6, 7, 8 also have substantially an equal width W in a direction transverse (perpendicular) to the longitudinal direction 9 of the side surface 4. Each major cutting edge 5, 5' has an adjacent rake surface 10, 10' in the side surface 4, wherein the rake surface 10 extends at a positive rake angle γ between the entire major cutting edge 5, 5' and the tree flat support surfaces 6, 7, 8. The rake surface 10, 10' has a uniform width and rake angle γ between the major cutting edge 5, 5' and the first flat support surface 6, wherein the width on the rake surface 10, 10' successively decreases between major cutting edge 5, 5' and the second and third flat support surfaces 7, 8 in a direction toward the corners of the insert.

Figs 2a - 2d show the tangential cutting insert 1 mounted in the insert seat 13 of the tool body 12. A bottom of the insert seat 13 comprises a main contact surface 14 arranged to provide support against the main surface 2, 3 of the tangential cutting insert 1. A first side wall 15 of the insert seat 13 comprises a first contact surface 16 arranged to provide support against the first flat support surface 6 on one side surface 4 of the tangential cutting insert 1. A second side wall 17 of the insert seat 13 comprises a second and third contact surface 18, 19 arranged to provide support against the second and third flat support surfaces 7, 8 respectively on another side surface 4' of the tangential cutting insert 1. The first side wall 15 of each insert seat 13 is located closer to the rear end 12b of the tool body 12 in relation to the second side wall 17, which is located closer to the front end 12a of the tool body 12.

As previously mentioned, the tangential cutting insert 1 is supported by three distinct, differently oriented and relatively large flat support surfaces 6, 7, 8 in each side surface 4, 4', which are abutting three corresponding seat contact surfaces 16, 18, 19 to effectively constrain insert movement and safeguard the integrity (reduce load/plastic deformation) on the seat contact surfaces 16, 18, 19. This achieves a stable support and efficient distribution of the large/varying cutting forces, which are also effectively reduced by the enhanced/easy cutting action provided by the recessed flat support surfaces 6, 7, 8.

Furthermore, each insert seat 13 is configured with an orientation on said contact surfaces 16, 18, 19 in the first and second side walls 15, 17 so that the active major cutting edge 5 is extending at a positive axial rake angle α in relation to the central rotation axis R when the tangential cutting insert is mounted in the insert seat 13. This further contributes to a positive/easy cutting action and a beneficial chip evacuation as the major cutting edge gradually enters the workpiece at said positive axial rake angle α. The positive axial rake angle α further enhances the toughness behaviour of the major cutting edge 5, 5' such that it may withstand relatively higher cutting forces without breaking or chipping.

A major cutting edge 5 on a tangential cutting insert 1, which is received in an insert seat 13 placed relatively closer to the front end 12a in the common helix flute 20, is arranged to overlap a portion of the next major cutting edge 5 of an adjacent tangential cutting insert 1, which is received in an insert seat 13 placed relatively closer to the rear end 12b in the common helix flute 20 (see also Figs 1a - 1b). Hence, an end portion on the major cutting edge 5 on a leading tangential cutting insert 1 is arranged to overlap an initial portion on the adjacent major cutting edge 5 on a trailing (rear) tangential cutting insert 1 in the common helix flute 20. This provides an uninterrupted (axially continuous, but tangentially stepwise) single cutting edge configuration formed collectively by the major cutting edges 5 along the common helix flute 20 of the long edge milling cutter 11.

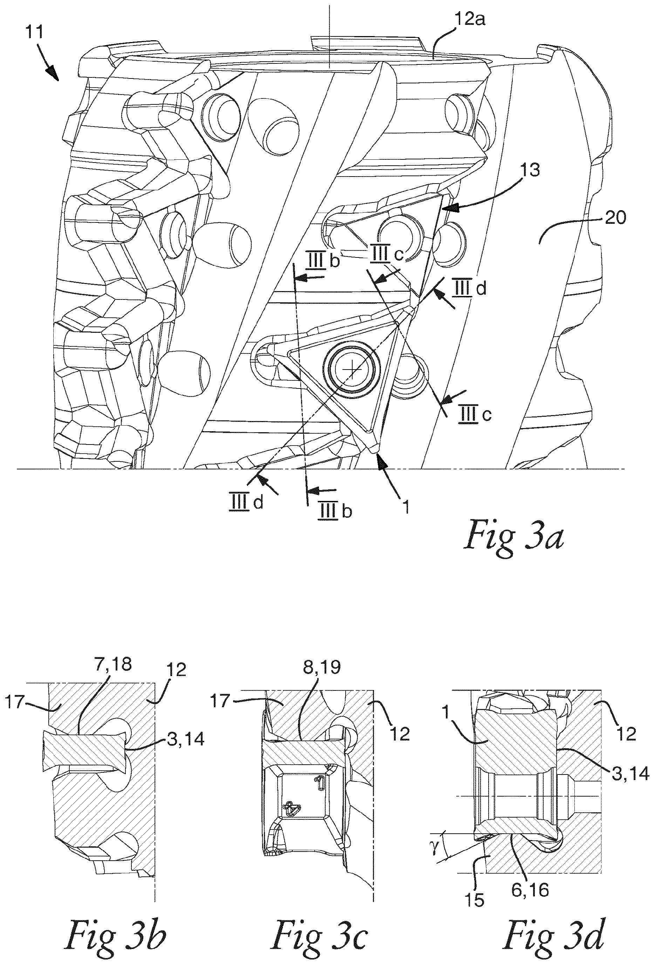

Figs 3a - 3d show an enlarged view of the insert seat including different cross-sections of the tangential cutting insert 1 arranged in the insert seat 13 of the tool body 12. Fig 3b is showing cross-section IIIb - IIIb in Fig 3a. As can be seen, Fig 3b shows the second flat support surface 7 of the tangential cutting insert 1 abutting a corresponding flat second contact surface 18 of the second side wall 17 in the insert seat 13. The cross-section also shows the main surface 3 of the tangential cutting insert abutting the main contact surface 14 in the bottom of the insert seat 13. Fig 3c is showing cross-section IIIc - IIIc in Fig 3a. Fig 3c shows the third flat support surface 8 of the tangential cutting insert abutting a corresponding flat third contact surface 19 of the second side wall 17 in the insert seat 13. Fig 3d shows cross-section IIId - IIId in Fig 3a. Fig 3d shows the first flat support surface 6 abutting a corresponding flat first contact surface 16 of the first side wall 15 in the insert seat 13.

The invention is not limited to the embodiment disclosed but may be varied and modified within the scope of the appended claims. For example, the tangential cutting insert may be formed as a single-sided insert with three indexable major cutting edges at the intersection of only one main surface and the three side surfaces.

## Claims

1. A tangential cutting insert (1) for a milling tool, the tangential cutting insert (1) comprising two opposing main surfaces (2, 3) having a triangular shape and three identical side surfaces (4) extending between the main surfaces (2, 3), wherein the tangential cutting insert (1) includes at least three identical and indexable major cutting edges (5) formed at the intersection of at least one of the main surfaces (2, 3) and the three identical side surfaces (4), **characterized in that** each side surface (4) includes three flat support surfaces (6, 7, 8) being recessed in relation to the major cutting edge (5) and arranged one after another in a longitudinal direction (9) of each side surface (4), wherein a first flat support surface (6) is disposed at a centre of each side surface (4) and forms the lowermost recessed support surface (6) in relation to the major cutting edge (5), wherein second and third flat support surfaces (7, 8) are located on opposite sides of the first flat support surface (6) and extend at an obtuse angle (β) with respect to the first flat support surface (6)

2. The tangential cutting insert according to claim 1, wherein the first flat support surface (6) extends in parallel with the major cutting edge (5).

3. The tangential cutting insert according to claim 1 or 2, wherein the first flat support surface (6) is relatively larger by having a longer extension than each one of the second and third flat support surfaces (7, 8) in the longitudinal direction (9) of each side surface (4).

4. The tangential cutting insert according to claim 3, wherein the first flat support surface (6) is 30% - 70% longer than each one of the second and third flat support surfaces (7, 8) in the longitudinal direction (9) of each side surface (4).

5. The tangential cutting insert according to any one of claims 1 - 4, wherein the second and third flat support surfaces (7, 8) are of equal size and length in the longitudinal direction (9) of each side surface (4).

6. The tangential cutting insert according to any one of claims 1 - 5, wherein the three flat support surfaces (6, 7, 8) have substantially an equal width (W) extension in a direction transverse to the longitudinal direction (9) of each side surface (4).

7. The tangential cutting insert according to any one of the preceding claims, wherein the obtuse angle (β) is larger than 150°, and preferably larger than 160°.

8. The tangential cutting insert according to any one of the preceding claims, wherein the three flat support surfaces (6, 7, 8) are arranged successively and extend along the entire side surface (4) in the longitudinal direction (9).

9. The tangential cutting insert according to any one of the preceding claims, wherein each major cutting edge (5) has an adjacent rake surface (10) in the side surface (4), wherein the rake surface (10) extends at a positive rake angle (γ) between the entire major cutting edge (5) and three flat support surfaces (6, 7, 8).

10. The tangential cutting insert according to any one of the preceding claims, wherein the tangential cutting insert is a double-sided tangential cutting insert (1) including six identical and indexable major cutting edges (5, 5') formed at the intersections of each of said two opposing main surfaces (2, 3) and the three identical side surfaces (4), wherein the three flat support surfaces (6, 7, 8) of each side surface (4) are recessed in relation to two opposite indexable major cutting edges (5).

11. A milling tool (11) comprising a tool body (12) being rotatable around a central rotation axis (R) and having a plurality of insert seats (13) in which the tangential cutting insert (1) according to any one of the preceding claims is received, wherein the tool body (12) has a front end (12a) and a rear end (12b), each insert seat (13) being formed in an envelope surface (12c) extending between the front end (12a) and the rear end (12b) of the tool body (12), wherein a bottom of the insert seat (13) comprises a main contact surface (14) arranged to provide support against the main surface (2, 3) of the tangential cutting insert (1), a first side wall (15) of the insert seat (13) comprises a first contact surface (16) arranged to provide support against the first flat support surface (6) on one side surface (4) of the tangential cutting insert (1), and a second side wall (17) of the insert seat (13) comprises a second and third contact surface (18, 19) arranged to provide support against the second and third flat support surfaces (7, 8) respectively on another side surface (4') of the tangential cutting insert (1).

12. The milling tool according to claim 11, wherein the first side wall (15) of the insert seat (13) is located closer to the rear end (12b) of the tool body (12) in relation to the second side wall (17), which is located closer to the front end (12a) of the tool body (12), in each of said insert seats (13).

13. The milling tool according to claim 11 or 12, wherein the milling tool is a long edge milling cutter (11), the tool body (12) comprising a cylindrical envelope surface (12c), wherein the plurality of insert seats (13) are placed one after the other in a common helix flute (20) along the cylindrical envelope surface (12c) of the tool body (12).

14. The milling tool according to claim 13, wherein the major cutting edge (5) of a tangential cutting insert (1), which is received in an insert seat (13) placed relatively closer to the front end (12a) in the common helix flute (20), is arranged to overlap a portion of the next major cutting edge (5) of an adjacent tangential cutting insert, which is received in an insert seat placed relatively closer to the rear end (12b) in the common helix flute (20).

15. The milling tool according to any one of claims 11 - 14, wherein each insert seat (13) is configured with an orientation on said contact surfaces (16, 18, 19) in the first and second side walls (15, 17) so that the active major cutting edge (5) is extending at a positive axial rake angle (α) in relation to the central rotation axis (R) when the tangential cutting insert (1) is received in the insert seat (13).

## Patentansprüche

1. Tangentialer Schneideinsatz (1) für ein Fräswerkzeug, wobei der tangentiale Schneideinsatz (1) zwei gegenüberliegende Hauptflächen (2, 3) aufweist, die eine dreieckige Gestalt aufweisen und drei identische Seitenflächen (4), die sich zwischen den Hauptflächen (2, 3) erstrecken, wobei der tangentiale Schneideinsatz (1) wenigstens drei identische und wendbare Hauptschneidkanten (5) aufweist, die an der Schnittstelle von wenigstens einer der Hauptflächen (2, 3) und den drei identischen Seitenflächen (4) gebildet werden, **dadurch gekennzeichnet, dass** jede Seitenfläche (4) drei flache Stützflächen (6, 7, 8) aufweist, die in Bezug auf die Hauptschneidkante (5) zurückgesetzt sind und in einer Längsrichtung (9) jeder Seitenfläche (4) eine nach der anderen angeordnet sind, wobei eine erste flache Stützfläche (6) in einem Zentrum jeder Seitenfläche (4) vorgesehen ist und die niedrigste zurückgesetzte Stützfläche (6) in Bezug auf die Hauptschneidkante (5) bildet, wobei zweite und dritte flache Stützflächen (7, 8) auf gegenüberliegenden Seiten der ersten flachen Stützfläche (6) angeordnet sind und sich in einem stumpfen Winkel (β) in Bezug auf die erste flache Stützfläche (6) erstrecken.

2. Tangentialer Schneideinsatz nach Anspruch 1, wobei sich die erste flache Stützfläche (6) parallel zu der Hauptschneidkante (5) erstreckt.

3. Tangentialer Schneideinsatz nach Anspruch 1 oder 2, wobei die erste flache Stützfläche (6) relativ größer ist, indem sie in Längsrichtung (9) der jeweiligen Seitenfläche (4) eine längere Ausdehnung als jeweils eine der zweiten und dritten flachen Stützfläche (7, 8) aufweist.

4. Tangentialer Schneideinsatz nach Anspruch 3, wobei die erste flache Stützfläche (6) in Längsrichtung (9) der jeweiligen Seitenfläche (4) 30 % bis 70 % länger als jede einzelne der zweiten und dritten flachen Stützfläche (7, 8) ist.

5. Tangentialer Schneideinsatz nach einem der Ansprüche 1 bis 4, wobei die zweiten und dritten flachen Stützflächen (7, 8) in Längsrichtung (9) der jeweiligen Seitenfläche (4) gleich lang und gleich groß und sind.

6. Tangentialer Schneideinsatz nach einem der Ansprüche 1 bis 5, wobei die drei flachen Stützflächen (6, 7, 8) in einer zu der Längsrichtung (9) jeder Seitenfläche (4) transversalen Richtung im Wesentlichen eine gleiche Breitenausdehnung (W) aufweisen.

7. Tangentialer Schneideinsatz nach einem der vorangehenden Ansprüche, wobei der stumpfe Winkel (β) >150° beträgt, und vorzugsweise > 160° beträgt.

8. Tangentialer Schneideinsatz an der vorangehenden Ansprüche, wobei die drei flachen Stützflächen (6, 7, 8) aufeinanderfolgend angeordnet sind und sich in Längsrichtung (9) entlang der gesamten Seitenfläche (4) erstrecken.

9. Tangentialer Schneideinsatz nach einem der vorangehenden Ansprüche, wobei jede Hauptschneidkante (5) eine benachbarte Spanfläche (10) in der Seitenfläche (4) aufweist, wobei die Spanfläche (10) sich in einem positiven Spanwinkel (γ) zwischen der gesamten Hauptschneidkante (5) und den drei flachen Stützflächen (6, 7, 8) erstreckt.

10. Tangentialer Schneideinsatz nach einem der vorangehenden Ansprüche, wobei der tangentiale Schneideinsatz ein doppelseitiger tangentialer Schneideinsatz (1) ist, der sechs identische und wendbare Hauptschneidkanten (5, 5') aufweist, die jeweils an den Schnittstellen der zwei gegenüberliegenden Hauptflächen (2, 3) und den drei identischen Seitenflächen (4) gebildet werden, wobei die drei flachen Stützflächen (6, 7, 8) der jeweiligen Seitenfläche (4) in Bezug auf die zwei gegenüberliegenden wendbaren Hauptschneidkanten (5) zurückgesetzt sind.

11. Fräswerkzeug (11) mit einem Werkzeugkörper (12), der um eine zentrale Rotationssachse (A) rotierbar ist und eine Mehrzahl an Einsatzsitzen (13) aufweist, in denen der tangentiale Schneideinsatz (1) nach einem der vorangehenden Ansprüche aufgenommen wird, wobei der Werkzeugkörper (12) ein vorderes Ende (12a) und ein hinteres Ende (12b) aufweist, wobei jeder Einsatzsitz (13) in einer Mantelfläche (12c) ausgebildet ist, die sich zwischen dem vorderen Ende (12a) und dem hinteren Ende (12b) des Werkzeugkörpers (12) erstreckt, wobei der Einsatzsitz (13) unten eine Hauptkontaktfläche (14) aufweist, die vorgesehen ist, um eine Stütze gegenüber der Hauptfläche (2, 3) des tangentialen Schneideinsatzes (1) bereitzustellen, wobei eine erste Seitenwand (15) des Einsatzsitzes (13) eine erste Kontaktfläche (16) aufweist, die vorgesehen ist, um eine Stütze gegen die erste flache Stützfläche (6) an einer Seitenfläche (4) des tangentialen Schneideinsatzes (1) bereitzustellen, und wobei eine zweite Seitenwand (17) des Einsatzsitzes (13) eine zweite und dritte Kontaktfläche (18, 19) aufweist, die vorgesehen ist, um jeweils eine Stütze gegen die zweite und dritte flache Stützfläche (7, 8) an einer anderen Seitenfläche (4') des tangentialen Schneideinsatzes (1) bereitzustellen.

12. Fräswerkzeug nach Anspruch 11, wobei in jedem der Einsatzsitze (13) bezogen auf die zweite Seitenwand (17), die näher an dem vorderen Ende (12a) des Werkzeughalters (12) angeordnet ist, die erste Seitenwand (15) des Einsatzsitzes (13) näher an dem hinteren Ende (12b) des Werkzeugkörpers (12) angeordnet ist.

13. Fräswerkzeug nach Anspruch 11 oder 12, wobei das Fräswerkzeug ein Kantenfräswerkzeug (11) ist, wobei der Werkzeugkörper (12) eine zylindrische Mantelfläche (12c) aufweist, wobei die Mehrzahl an Einsatzsitzen (13) einer nach dem anderen in einer im Allgemeinen helikalen Nut (20) entlang der zylindrischen Mantelfläche (12c) des Werkzeughalters (12) angeordnet sind.

14. Fräswerkzeug nach Anspruch 13, wobei die Hauptschneidkante (5) des tangentialen Schneideinsatzes (1), der in einem Einsatzsitz (13) aufgenommen wird, der relativ näher an dem vorderen Ende (12a) in der im Allgemeinen helikalen Nut (20) angeordnet ist, so vorgesehen ist, dass er einen Teil der nächsten Hauptschneidkante (5) eines benachbarten tangentialen Schneideinsatzes, der in einem Einsatzsitz angeordnet ist, der relativ näher an dem hinteren Ende (12b) der im Allgemeinen helikalen Nut (20) angeordnet ist, überlappt.

15. Fräswerkzeug nach einem der Ansprüche 11 bis 14, wobei jeder Einsatzsitz (13) mit einer solchen Orientierung auf den Kontaktflächen (16, 18, 19) in der ersten und zweiten Seitenwand (15, 17) konfiguriert ist, dass sich die aktive Hauptschneidkante (5) in Bezug auf die zentrale Rotationssachse (R) in einem positiven axialen Spanwinkel (α) erstreckt, wenn der tangentiale Schneideinsatz (1) in dem Einsatzsitz (13) aufgenommen wird.

## Revendications

1. Plaquette de coupe tangentielle (1) pour un outil de fraisage, la plaquette de coupe tangentielle (1) comprenant deux surfaces principales opposées (2, 3) ayant une forme triangulaire et trois surfaces latérales identiques (4) s'étendant entre les surfaces principales (2, 3), où la plaquette de coupe tangentielle (1) inclut au moins trois arêtes de coupe principales identiques et interchangeables (5) formées à l'intersection d'au moins l'une des surfaces principales (2, 3) et des trois surfaces latérales identiques (4), **caractérisée en ce que** chaque surface latérale (4) inclut trois surfaces de support planes (6, 7, 8) étant en évidement par rapport à l'arête de coupe principale (5) et agencées l'une après l'autre dans une direction longitudinale (9) de chaque surface latérale (4), où une première surface de support plane (6) est disposée au niveau d'un centre de chaque surface latérale (4) et forme la surface de support la plus en évidement (6) par rapport à l'arête de coupe principale (5), où les deuxième et troisième surfaces de support planes (7, 8) sont situées sur des côtes opposés de la première surface de support plane (6) et s'étendent suivant un angle obtus (β) par rapport à la première surface de support plane (6).

2. Plaquette de coupe tangentielle selon la revendication 1, dans laquelle la première surface de support plane (6) s'étend parallèlement à l'arête de coupe principale (5).

3. Plaquette de coupe tangentielle selon la revendication 1 ou 2, dans laquelle la première surface de support plane (6) est relativement plus importante en ayant une plus longue étendue que chacune des deuxième et troisième surfaces de support planes (7, 8) dans la direction longitudinale (9) de chaque surface latérale (4).

4. Plaquette de coupe tangentielle selon la revendication 3, dans laquelle la première surface de support plane (6) est de 30 % à 70 % plus longue que chacune des deuxième et troisième surfaces de support planes (7, 8) dans la direction longitudinale (9) de chaque surface latérale (4).

5. Plaquette de coupe tangentielle selon l'une quelconque des revendications 1 à 4, dans laquelle les deuxième et troisième surfaces de support planes (7, 8) sont de mêmes taille et longueur dans la direction longitudinale (9) de chaque surface latérale (4).

6. Plaquette de coupe tangentielle selon l'une quelconque des revendications 1 à 5, dans laquelle les trois surfaces de support planes (6, 7, 8) présentent sensiblement une même étendue en largeur (W) dans une direction transversale à la direction longitudinale (9) de chaque surface latérale (4).

7. Plaquette de coupe tangentielle selon l'une quelconque des revendications précédentes, dans laquelle l'angle obtus (β) est supérieur à 150°, et de préférence supérieur à 160°.

8. Plaquette de coupe tangentielle selon l'une quelconque des revendications précédentes, dans laquelle les trois surfaces de support planes (6, 7, 8) sont agencées successivement et s'étendent sur toute la longueur de la surface latérale (4) dans la direction longitudinale (9).

9. Plaquette de coupe tangentielle selon l'une quelconque des revendications précédentes, dans laquelle chaque arête de coupe principale (5) présente une surface de dépouille adjacente (10) dans la surface latérale (4), où la surface de dépouille (10) s'étend suivant un angle de dépouille positif (γ) entre l'arête de coupe principale entière (5) et les trois surfaces de support planes (6, 7, 8).

10. Plaquette de coupe tangentielle selon l'une quelconque des revendications précédentes, où la plaquette de coupe tangentielle est une plaquette de couple tangentielle double face (1) incluant six arêtes de coupe principales identiques et interchangeables (5, 5') formées aux intersections de chacune desdites deux surfaces principales opposées (2, 3) et des trois surfaces latérales identiques (4), où les trois surfaces de support planes (6, 7, 8) de chaque surface latérale (4) sont en évidement par rapport à deux arêtes de coupe principales interchangeables opposées (5).

11. Outil de fraisage (11) comprenant un corps d'outil (12) pouvant être entraîné en rotation autour d'un axe de rotation central (R) et présentant une pluralité de sièges de plaquette (13) dans lesquels la plaquette de coupe tangentielle (1) selon l'une quelconque des revendications précédentes est reçue, où le corps d'outil (12) présente une extrémité avant (12a) et une extrémité arrière (12b), chaque siège de plaquette (13) étant formé dans une surface d'enveloppe (12c) s'étendant entre l'extrémité avant (12a) et l'extrémité arrière (12b) du corps d'outil (12), où un fond du siège de plaquette (13) comprend une surface de contact principale (14) agencée pour fournir un support à la surface principale (2, 3) de la plaquette de coupe tangentielle (1), une première paroi latérale (15) du siège de plaquette (13) comprend une première surface de contact (16) agencée pour fournir un support à la première surface de support plane (6) sur une surface latérale (4) de la plaquette de coupe tangentielle (1), et une seconde paroi latérale (17) du siège de plaquette (13) comprend des deuxième et troisième surfaces de contact (18, 19) agencées pour fournir un support aux deuxième et troisième surfaces de support planes (7, 8) respectivement sur une autre surfaces latérale (4') de la plaquette de coupe tangentielle (1).

12. Outil de fraisage selon la revendication 11, dans lequel la première paroi latérale (15) du siège de plaquette (13) est située plus près de l'extrémité arrière (12b) du corps d'outil (12) par rapport à la seconde paroi latérale (17), laquelle est située plus près de l'extrémité avant (12a) du corps d'outil (12), dans chacun desdits sièges de plaquette (13).

13. Outil de fraisage selon la revendication 11 ou 12, où l'outil de fraisage est une fraise hérisson grande longueur (11), le corps d'outil (12) comprenant une surface d'enveloppe cylindrique (12c), où la pluralité de sièges de plaquette (13) sont placés l'un après l'autre dans une goujure hélicoïdale commune (20) le long de la surface d'enveloppe cylindrique (12c) du corps d'outil (12).

14. Outil de fraisage selon la revendication 13, dans lequel l'arête de coupe principale (5) d'une plaquette de coupe tangentielle (1), laquelle est reçue dans un siège de plaquette (13) situé relativement plus près de l'extrémité avant (12a) dans la goujure hélicoïdale commune (20), est agencée pour chevaucher une partie de l'arête de coupe principale suivante (5) d'une plaquette de coupe tangentielle adjacente, laquelle est reçue dans un siège de plaquette situé relativement plus près de l'extrémité arrière (12b) dans la goujure hélicoïdale commune (20).

15. Outil de fraisage selon l'une quelconque des revendications 11 à 14, dans lequel chaque siège de plaquette (13) est configuré avec une orientation sur lesdites surfaces de contact (16, 18, 19) dans les première et seconde parois latérales (15, 17) de sorte que l'arête de coupe principale active (5) s'étend suivant un angle de dépouille axial positif (α) par rapport à l'axe de rotation central (R) lorsque la plaquette de coupe tangentielle (1) est reçue dans le siège de plaquette (13).
